# EUROPEAN PATENT APPLICATION

(11) **EP 4 832 090 A1**
(43) Date of publication of application: **28.10.2026**
(21) Application number: 24908354.4
(22) Date of filing: 18.12.2024
(51) Int. Cl.: H01M 4/36, H01M 4/525, H01M 4/505, C01G 53/00, H01M 4/131, H01M 10/052, H01M 4/02

(54) **CATHODE ACTIVE MATERIAL FOR LITHIUM SECONDARY BATTERY, MANUFACTURING METHOD OF SAME, AND LITHIUM SECONDARY BATTERY COMPRISING SAME**

(30) Priority: 18.12.2023 KR 20230184347
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); NAM, Sang Cheol, Pohang-si, Gyeongsangbuk-do 37859 (KR); KIM, Young Sang, Pohang-si, Gyeongsangbuk-do 37859 (KR); KIM, Chang Min, Pohang-si, Gyeongsangbuk-do 37859 (KR); SEO, Bohyeong, Pohang-si, Gyeongsangbuk-do 37859 (KR)
(74) Representative: Pfenning, Meinig & Partner mbB
(86) International application number: PCT/KR2024/097127
(87) International publication number: WO 2025/136050

(57) **Abstract**

The present invention relates to a positive electrode active material for a lithium secondary battery, including a lithium metal oxide having a nickel (Ni)-containing layered crystal structure in the form of single particles and a coating layer surrounding an entire surface of the lithium metal oxide and containing a zirconium (Zr) compound, wherein the zirconium compound includes Li₂ZrO₃ and ZrO₂, and a content of Li₂ZrO₃ is 10 wt% to 53 wt% based on a total weight of Li₂ZrO₃ and ZrO₂.

## Description

### [TECHNICAL FIELD]

The present invention relates to a positive electrode active material for a lithium secondary battery, a method for manufacturing the same, and a lithium secondary battery including the same, and more particularly, to a single-particle-based positive electrode active material for a lithium secondary battery, a method for manufacturing the same, and a lithium secondary battery including the same.

### [BACKGROUND ART]

As positive electrode active materials of lithium secondary batteries, lithium cobalt oxide (LiCoO₂), lithium nickel oxide (LiNiO₂), lithium manganese oxide (LiMnO₂ or LiMnO₄, etc.), lithium iron phosphate compounds (LiFePO₄), and the like have been used. Among these, lithium cobalt oxide has advantages of a high operating voltage and excellent capacity characteristics, but cobalt, which is a raw material thereof, is expensive and has unstable supply, making it difficult to commercially apply lithium cobalt oxide to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more transition metals have been developed to compensate for problems of lithium transition metal oxides including Ni, Co, or Mn alone, and among these, lithium nickel cobalt manganese oxide including Ni, Co, and Mn has been widely used in the field of electric vehicle batteries.

Conventional lithium nickel cobalt manganese oxide has generally been in the form of spherical secondary particles in which several tens to several hundreds of primary particles are aggregated. However, in the case of lithium nickel cobalt manganese oxide in the form of secondary particles in which a large number of primary particles are aggregated as described above, there are problems in that particle cracking, in which primary particles fall off, easily occurs during a rolling process when a positive electrode is manufactured, and cracks occur inside particles during charging and discharging. When particle cracking or cracks occur in the positive electrode active material, a contact area with an electrolyte solution increases, gas generation and degradation of the active material due to side reactions with the electrolyte solution increase, and consequently lifespan characteristics deteriorate.

In addition, recently, demand for high-output and high-capacity batteries such as batteries for electric vehicles has increased, and accordingly, the nickel content in positive electrode active materials has gradually increased, that is, a so-called "high-nickel" trend has emerged. When the nickel content in a positive electrode active material increases, initial capacity characteristics are improved. However, when charging and discharging are repeated, a large amount of highly reactive Ni⁴⁺ ions is generated, structural collapse of the positive electrode active material occurs, and as a result, degradation speed of the positive electrode active material increases, thereby causing problems of deteriorated lifespan characteristics and deteriorated battery safety.

In order to solve the above problems, a technology has been proposed in which, when manufacturing lithium nickel cobalt manganese oxide, a calcination temperature is increased to manufacture a positive electrode active material in the form of single particles, rather than secondary particles. In the case of a positive electrode active material in the form of single particles, since a contact area with an electrolyte solution is smaller than that of a conventional positive electrode active material in the form of secondary particles, side reactions with the electrolyte solution are reduced, and particle strength is excellent, so that particle cracking during electrode manufacture is reduced. Accordingly, when a positive electrode active material in the form of single particles is applied, there are advantages in that gas generation is reduced and lifespan characteristics are excellent.

However, in order to grow high-nickel-based lithium transition metal oxide in the form of single particles into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on particle surfaces, thereby increasing surface resistance and decreasing mobility of lithium ions. Such decrease in lithium ion mobility causes imbalance in lithium ion movement, causing deformation of a crystal structure and particle cracks, and thus causing a problem of deteriorated lifespan characteristics such as capacity reduction as cycles proceed.

In addition, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of a battery. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby requiring separate wastewater treatment facilities.

### [DETAILED DESCRIPTION OF THE INVENTION]

### [Technical Problem]

Accordingly, one object of the present invention is to provide a positive electrode active material for a lithium secondary battery, which is a lithium metal oxide in the form of single particles, has reduced residual lithium, improved lifespan characteristics, and excellent capacity characteristics, a method for manufacturing the same, and a lithium secondary battery including the same.

### [Technical Solution]

One embodiment of the present invention provides a positive electrode active material for a lithium secondary battery, including: a lithium metal oxide having a nickel (Ni)-containing layered crystal structure in the form of single particles; and a coating layer surrounding an entire surface of the lithium metal oxide and containing a zirconium (Zr) compound, wherein the zirconium compound includes Li₂ZrO₃ and ZrO₂, and a content of Li₂ZrO₃ is 10 wt% to 53 wt% based on a total weight of Li₂ZrO₃ and ZrO₂.

An average thickness of the coating layer may be 0.1 nm to 1.1 nm.

An average of a difference value between a maximum thickness and a minimum thickness of the coating layer may be 0.6 nm or less.

A content of a zirconium element in the positive electrode active material may be 1400 ppm to 7500 ppm based on a total weight of the positive electrode active material.

The Li₂ZrO₃ may be amorphous.

The ZrO₂ may be amorphous.

The positive electrode active material may have a residual lithium content of 5500 ppm or less.

A content of nickel in the lithium metal oxide may be 80 mol% or more based on a total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, including: preparing a lithium metal oxide having a nickel (Ni)-containing layered crystal structure in the form of single particles; and forming a coating layer containing a zirconium (Zr) compound on the lithium metal oxide by an atomic layer deposition method, wherein a water-washing process is not performed after preparing the lithium metal oxide and before forming the coating layer, wherein the zirconium compound includes Li₂ZrO₃ and ZrO₂, and wherein a content of Li₂ZrO₃ is 10 wt% to 53 wt% based on a total weight of Li₂ZrO₃ and ZrO₂.

The atomic layer deposition may be performed for 1 to 7 cycles.

One cycle of the atomic layer deposition may include supplying a zirconium-containing gas onto the lithium metal oxide to adsorb the zirconium-containing gas onto the lithium metal oxide; and supplying and reacting a reactant onto the lithium metal oxide onto which the zirconium-containing gas is adsorbed.

A supply amount of the zirconium-containing gas may be 0.2 wt% to 2.0 wt% based on the total weight of the lithium metal oxide.

A supply amount of the reactant may be 0.001 wt% to 0.01 wt% based on the total weight of the lithium metal oxide.

The atomic layer deposition may be performed at a temperature of 200°C to 350°C.

The atomic layer deposition may be performed at a pressure of 1 torr to 10 torr.

Still another embodiment of the present invention provides a positive electrode for a lithium secondary battery, including the above-described positive electrode active material.

Still another embodiment of the present invention provides a lithium secondary battery including the positive electrode for a lithium secondary battery.

### [Advantageous Effects]

The positive electrode active material for a lithium secondary battery according to one embodiment of the present invention is a lithium metal oxide in the form of single particles, and as a very thin and uniform zirconium (Zr) coating layer is coated after a calcination process without a separate water-washing process, residual lithium can be reduced and lifespan characteristics can be improved, and capacity characteristics can also be excellently implemented.

### [BRIEF DESCRIPTION OF THE DRAWINGS]

FIG. 1 is an SEM image of a positive electrode active material manufactured according to Example 1.
FIG. 2 is a TEM-EDS elemental mapping image of a surface portion of the positive electrode active material manufactured according to Example 1.
FIG. 3 is a nickel element mapping image among the images of FIG. 2.
FIG. 4 is a cobalt element mapping image among the images of FIG. 2.
FIG. 5 is a manganese element mapping image among the images of FIG. 2.
FIG. 6 is a zirconium element mapping image among the images of FIG. 2.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to one embodiment of the present invention includes a lithium metal oxide in the form of single particles. The positive electrode active material in the form of single particles has a smaller specific surface area than conventional general secondary particles, thereby reducing gas generation due to side reactions with an electrolyte solution, has high particle strength, thereby suppressing particle cracking during rolling, and can reduce crack occurrence according to repeated charging and discharging. Accordingly, compared with secondary particles, lifespan and safety are excellent, and there is an advantage in that high energy density of an electrode can be implemented.

In the present specification, "single particle" is a term used to distinguish from conventional generally used positive electrode active material particles in the form of secondary particles formed by aggregation of several tens to several hundreds of primary particles, and is a concept including a single particle composed of one primary particle and aggregate particles of 40 or fewer primary particles. In addition, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains. In addition, "crystal grain" means a distinguishable region in which atoms in a primary particle form a lattice structure in a predetermined direction.

In addition, the content of nickel in the lithium metal oxide according to the present invention may be 80 mol% or more, and more specifically 85 mol% or more, based on the total number of moles of metals excluding lithium. As the lithium metal oxide contains nickel in such a high content, that is, so-called "high nickel," high capacity of a battery can be achieved.

However, in order to grow high-nickel-based lithium transition metal oxide in the form of single particles into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on particle surfaces, thereby increasing surface resistance and decreasing mobility of lithium ions. Such decrease in lithium ion mobility causes imbalance in lithium ion movement, causing deformation of a crystal structure and particle cracks, and thus causing a problem of deteriorated lifespan characteristics such as capacity reduction as cycles proceed.

In addition, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of a battery. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby requiring separate wastewater treatment facilities.

Accordingly, the present inventors studied a method capable of improving lifespan characteristics of single particles, reducing residual lithium, and excellently implementing capacity characteristics. As a result, the present invention was completed by finding that, after manufacture of a lithium metal oxide in the form of single particles, when zirconium is coated by an atomic layer deposition process without a separate water-washing process and other overall coating process conditions are appropriately controlled, residual lithium of the single-particle positive electrode active material can be reduced, lifespan characteristics can be improved, and, at the same time, capacity characteristics can be excellently implemented.

More specifically, the positive electrode active material for a lithium secondary battery according to one embodiment of the present invention includes a coating layer surrounding the entire surface of the lithium metal oxide and containing a zirconium (Zr) compound. That is, the coating layer is a conformal-type coating layer uniformly surrounding the entire surface of the lithium metal oxide particles, and has a very thin and uniform thickness. Accordingly, compared with an island-type coating layer, the effect of improving structural stability of the positive electrode active material and the effect of reducing residual lithium can be more suitably implemented, and consequently the effect of improving lifespan and safety of the positive electrode active material can be preferably implemented. Meanwhile, a conformal-type coating layer having a very thin and uniform thickness can be implemented by performing coating by an atomic layer deposition process.

At this time, the zirconium compound includes Li₂ZrO₃ and ZrO₂, and the content of Li₂ZrO₃ is 10 wt% to 53 wt%, and more specifically may be 20 wt% to 50 wt% or 20 wt% to 40 wt%, based on the total weight of Li₂ZrO₃ and ZrO₂. When the content of Li₂ZrO₃ satisfies the above range, capacity and lifespan characteristics of the positive electrode active material can be preferably implemented. Specifically, the content of Li₂ZrO₃ in the above range may be a larger content than in a case where a coating process is performed after a water-washing process is performed after manufacture of a lithium metal oxide. As described above, in the positive electrode active material according to the present invention, a zirconium coating process is performed immediately after manufacture of the lithium metal oxide without a separate water-washing process. At this time, compared with a case in which the water-washing process is performed, when the water-washing process is not performed, a large amount of residual lithium (LiOH and/or Li₂CO₃) remaining on the surface of the lithium metal oxide and the zirconium raw material actively participate in the coating reaction, and thus the content of Li₂ZrO₃ can be obtained to a large extent as in the above range. As a result, the effect of increasing the content of Li₂ZrO₃, which has relatively better electrochemical activity than ZrO₂, and the effect of not performing a water-washing process act in combination, so that the positive electrode active material according to the present invention can preferably implement capacity and lifespan characteristics.

The content of Li₂ZrO₃ in the above range can be more easily obtained by controlling non-performance of the water-washing process, the number of cycles of the atomic layer deposition process, a temperature during the atomic layer deposition process, a supply amount of a zirconium-containing gas per cycle, a supply amount of a reactant per cycle, and the like. This will be described in more detail in the method for manufacturing a positive electrode active material described below.

Meanwhile, a weight ratio of Li₂ZrO₃ to the total weight of Li₂ZrO₃ and ZrO₂ in the coating layer can be confirmed through X-ray Photoelectron Spectroscopy (XPS) analysis of the surface of the positive electrode active material.

In addition, an average thickness of the coating layer may be 0.1 nm to 1.1 nm, and more specifically 0.2 nm to 1.1 nm or 0.2 nm to 0.75 nm. When the average thickness of the coating layer satisfies the above range, residual lithium properties, capacity, and lifespan characteristics of the positive electrode active material can be more preferably implemented.

The average thickness of the coating layer in the above range can be more easily obtained by controlling the number of cycles of the atomic layer deposition process, a temperature during the atomic layer deposition process, a supply amount of a zirconium-containing gas per cycle, a supply amount of a reactant per cycle, and the like, and can be obtained in a more appropriate range when the water-washing process is not performed. This will be described in more detail in the method for manufacturing a positive electrode active material described below.

In addition, the average thickness of the coating layer can be measured by the following method. First, the thickness of the coating layer for one positive electrode active material particle can be calculated by analyzing a cross-sectional TEM image after FIB (Focused Ion Beam) milling of the positive electrode active material particle, randomly selecting 10 positions from a surface portion of the positive electrode active material particle, and obtaining an average value of coating layer thicknesses at the selected positions. Next, the average thickness of the coating layer can be calculated by obtaining an average of coating layer thicknesses measured by the same method for 20 arbitrary positive electrode active material particles among positive electrode active material powder.

In addition, an average of a difference value between a maximum thickness and a minimum thickness of the coating layer may be 0.6 nm or less, and more specifically 0.5 nm or less. That is, since the coating layer according to the present invention is manufactured through an atomic layer deposition-type coating process, thickness uniformity of the coating layer can be improved. Accordingly, resistance of the coating layer can be reduced, and thus the effect of improving capacity and lifespan characteristics of the positive electrode active material can be more preferably implemented.

Meanwhile, the average of the difference value between the maximum thickness and the minimum thickness of the coating layer in the above range can be more easily obtained by controlling the number of cycles of the atomic layer deposition process, a temperature during the atomic layer deposition process, a supply amount of a zirconium-containing gas per cycle, a supply amount of a reactant per cycle, and the like. This will be described in more detail in the method for manufacturing a positive electrode active material described below.

In addition, the average of the difference value between the maximum thickness and the minimum thickness of the coating layer can be measured by the following method. First, for one positive electrode active material particle, a difference value between a maximum thickness and a minimum thickness can be calculated by analyzing a cross-sectional TEM image after FIB (Focused Ion Beam) milling of the positive electrode active material particle, calculating a maximum thickness and a minimum thickness among the entire coating layer surrounding the active material particle, and obtaining a difference value therebetween. Next, the average of the difference value between the maximum thickness and the minimum thickness of the coating layer can be calculated by obtaining an average of coating layer thicknesses measured by the same method for 20 arbitrary positive electrode active material particles among positive electrode active material powder.

In addition, a content of a zirconium element in the positive electrode active material may be 1400 ppm to 7500 ppm, and more specifically 1600 ppm to 6500 ppm or 1600 ppm to 5500 ppm, based on the total weight of the positive electrode active material. When the content of the zirconium element in the positive electrode active material satisfies the above range, coating is performed with an appropriate amount of zirconium, and capacity and lifespan characteristics of the positive electrode active material can be more preferably implemented.

Meanwhile, the content of the zirconium element in the positive electrode active material in the above range can be more easily obtained by controlling the number of cycles of the atomic layer deposition process, a temperature during the atomic layer deposition process, a supply amount of a zirconium-containing gas per cycle, a supply amount of a reactant per cycle, and the like.

Meanwhile, in the present specification, the content of the aluminum element in the positive electrode active material can be measured through ICP (inductively coupled plasma spectroscopy) component analysis.

In addition, the Li₂ZrO₃ may be amorphous, and the ZrO₂ may be amorphous. Since Li₂ZrO₃ and ZrO₂, which are zirconium compounds in the coating layer, are amorphous, lithium ion mobility can be improved, and capacity and output characteristics of the positive electrode active material can be more preferably implemented.

Amorphousness of the zirconium compounds can be confirmed by TEM (transmission electron microscopy) image analysis or X-ray diffraction pattern analysis of the positive electrode active material.

Meanwhile, as the positive electrode active material according to the present invention is coated with the zirconium coating layer, residual lithium (LiOH and/or Li₂CO₃) remaining on the surface after calcination of the lithium metal oxide reacts with the zirconium raw material to form the coating layer, and thus residual lithium can be effectively reduced. Accordingly, the positive electrode active material according to the present invention may have a residual lithium content of 5500 ppm or less, and more specifically 5200 ppm or less. Accordingly, gas generation due to side reactions between residual lithium and an electrolyte solution and a battery swelling phenomenon can be suppressed, thereby improving safety of the battery.

The lithium metal oxide according to the present invention may more specifically be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium metal oxide of Chemical Formula 1, nickel may be included in an amount corresponding to x, that is, 0.8≤x<1. When the nickel content satisfies the above range, high capacity of a battery can be achieved.

In the lithium metal oxide of Chemical Formula 1, cobalt may be included in an amount corresponding to y, that is, 0≤y≤0.2. When the cobalt content is too small, growth of crystal grain size may be inhibited, and output characteristics may deteriorate. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production costs may increase and active material stability may decrease. When the manganese content is too large, capacity and output characteristics of the battery may deteriorate.

In the lithium metal oxide of Chemical Formula 1, M, which is another doping element, may be included in an amount corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement another doping effect.

### 2. Method for Manufacturing Positive Electrode Active Material

Another embodiment of the present invention provides a method for manufacturing a positive electrode active material for a lithium secondary battery, including: preparing a lithium metal oxide having a nickel (Ni)-containing layered crystal structure in the form of single particles; and forming a coating layer containing a zirconium (Zr) compound on the lithium metal oxide by an atomic layer deposition method, wherein a water-washing process is not performed after preparing the lithium metal oxide and before forming the coating layer, wherein the zirconium compound includes Li₂ZrO₃ and ZrO₂, and wherein a content of Li₂ZrO₃ is 10 wt% to 53 wt% based on a total weight of Li₂ZrO₃ and ZrO₂.

Hereinafter, the method for manufacturing a positive electrode active material for a lithium secondary battery according to another embodiment of the present invention will be described in detail step by step.

First, a lithium metal oxide having a nickel (Ni)-containing layered crystal structure in the form of single particles is prepared.

More specifically, the lithium metal oxide in the form of single particles may be prepared by preparing a metal precursor, then mixing and calcining the metal precursor with a lithium raw material, and pulverizing the same.

More specifically, the metal precursor may be a metal hydroxide.

The metal precursor may be prepared, for example, by adding a complexing agent-containing solution and a pH adjusting agent-containing solution to a metal-containing solution including a nickel raw material, a manganese raw material, or a cobalt raw material to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, or oxyhydroxide, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, or the cobalt raw material to a solvent, specifically water, or a mixture of water and an organic solvent uniformly miscible with water, for example, alcohol or the like.

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water, for example, alcohol or the like, may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water, for example, alcohol or the like, may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, may be performed at a temperature of 30°C to 70°C, and may be performed at a pH of 10 to 13.

By the above process, particles of a nickel(-or manganese-cobalt) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, or manganese in the precursor may be controlled by controlling the concentrations of the nickel raw material, the cobalt raw material, or the manganese raw material. That is, the concentrations of the nickel raw material, the cobalt raw material, and the manganese raw material may be controlled such that the molar ratio of nickel, cobalt, or manganese in the lithium metal oxide, which is the final product, is within the range according to the present invention.

As the lithium raw material, a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 750°C to 1000°C. When the calcination temperature is too low, the lithium metal oxide in the form of single particles may not be formed. When the calcination temperature is too high, crystal structure defects due to over-calcination may occur, and electrochemical characteristics may deteriorate.

In addition, the calcination may be performed for 5 hours to 20 hours. When the calcination time is too short, the lithium metal oxide in the form of single particles may not be formed. When the calcination time is too long, crystal structure defects due to over-calcination may occur, and electrochemical characteristics may deteriorate.

In addition, the atmosphere during calcination is not particularly limited, but, for example, calcination may be performed in an oxygen (O₂) or air atmosphere.

The pulverization may be performed according to a general pulverization process in the art, and may be performed, for example, using a jet mill.

At this time, a water-washing process may not be performed after preparing the lithium metal oxide and before forming the coating layer. The water-washing process is generally performed to remove residual lithium remaining on the surface of the synthesized lithium metal oxide. However, the water-washing process may damage the surface structure of the positive electrode active material and deteriorate electrochemical characteristics such as capacity, output, and lifespan of the positive electrode active material. Accordingly, in the present invention, the residual lithium reduction effect can be substituted by the coating process described below instead of the water-washing process. Accordingly, the residual lithium reduction effect and the effect of preserving electrochemical characteristics of the positive electrode active material can be simultaneously implemented.

Next, a coating layer containing a zirconium (Zr) compound is formed on the lithium metal oxide by an atomic layer deposition method.

At this time, the atomic layer deposition may be performed for 1 to 7 cycles, and more specifically 1 to 5 cycles. When the number of cycles during atomic layer deposition satisfies the above range, various physical properties of the positive electrode active material, such as the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material, can be appropriately implemented within the ranges according to the present invention. Accordingly, capacity and lifespan characteristics of the positive electrode active material can be preferably implemented.

One cycle of the atomic layer deposition may more specifically include supplying a zirconium-containing gas onto the lithium metal oxide to adsorb the zirconium-containing gas onto the lithium metal oxide; and supplying and reacting a reactant onto the lithium metal oxide onto which the zirconium-containing gas is adsorbed.

At this time, a supply amount of the zirconium-containing gas may be 0.2 wt% to 2.0 wt%, and more specifically 0.5 wt% to 1.5 wt%, based on the total weight of the lithium metal oxide. When the supply amount of the zirconium-containing gas satisfies the above range, zirconium coating can be appropriately performed in atomic layer units per cycle. Accordingly, various physical properties of the positive electrode active material, such as the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material, can be appropriately implemented within the ranges according to the present invention, and as a result, capacity and lifespan characteristics of the positive electrode active material can be preferably implemented.

In addition, a supply amount of the reactant may be 0.001 wt% to 0.01 wt%, and more specifically 0.0015 wt% to 0.003 wt%, based on the total weight of the lithium metal oxide. When the supply amount of the reactant satisfies the above range, zirconium coating can be appropriately performed in atomic layer units per cycle. Accordingly, various physical properties of the positive electrode active material, such as the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material, can be appropriately implemented within the ranges according to the present invention, and as a result, capacity and lifespan characteristics of the positive electrode active material can be preferably implemented.

The zirconium-containing gas may be, for example, Zr(OiPr)₄ (zirconium(IV) isopropoxide).

The reactant may be, for example, water (H₂O) or ozone (O₃).

The atomic layer deposition may be performed at a temperature of 200°C to 350°C, and more specifically 220°C to 300°C. When the temperature during atomic layer deposition satisfies the above range, the zirconium-containing gas and the reactant can smoothly react, and the zirconium coating layer can be easily formed. Accordingly, various physical properties of the positive electrode active material, such as the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material, can be appropriately implemented within the ranges according to the present invention, and as a result, capacity and lifespan characteristics of the positive electrode active material can be preferably implemented.

The atomic layer deposition may be performed at a pressure of 1 torr to 10 torr. When the pressure during atomic layer deposition satisfies the above range, the zirconium-containing gas and the reactant can smoothly react, and the zirconium coating layer can be easily formed. Accordingly, various physical properties of the positive electrode active material, such as the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material, can be appropriately implemented within the ranges according to the present invention, and as a result, capacity and lifespan characteristics of the positive electrode active material can be preferably implemented.

### 3. Positive Electrode and Lithium Secondary Battery

Still another embodiment of the present invention provides a positive electrode for a lithium secondary battery, including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives, for example, for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 wt% to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

(Preparation of Lithium Metal Oxide) A lithium metal oxide in the form of single particles having a composition of LiNi_{0.88}Co_{0.095}Mn_{0.025}O₂ was prepared.

At this time, after synthesis of the lithium metal oxide, a separate water-washing process was not performed.

(Coating) A fluidized-bed-type atomic layer deposition reactor was used, and low-vacuum conditions were maintained such that a reaction temperature was 250°C and a pressure in a chamber was maintained at 1 torr to 10 torr. As a precursor, Zr(OiPr)₄ (zirconium(IV) isopropoxide) was used as a zirconium-containing gas, and water (H₂O) was used as a reactant.

The prepared lithium metal oxide was introduced into the atomic layer deposition reactor, the zirconium-containing gas was injected together with N₂ gas and chemically adsorbed and saturated on the lithium metal oxide base material, and then H₂O was injected again to cause a chemical reaction, thereby forming a zirconium compound-containing coating layer. In addition, an input amount of the zirconium-containing gas per cycle was 1.0 wt% based on the total weight of the lithium metal oxide, and an input amount of H₂O per cycle was 0.002 wt% based on the total weight of the lithium metal oxide.

This series of processes was defined as one cycle, and a total of one cycle was performed.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The prepared slurry was coated on a 20 µm-thick Al foil using a doctor blade, and then dried and rolled. The electrode loading amount was 15.4 mg/cm², and the rolling density (25°C, 20 kN) was 3.6 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo Metal).

### Example 2

A positive electrode active material and a lithium secondary battery were manufactured in the same manner as in Example 1, except that, in the coating step, the number of atomic layer deposition cycles was 2 cycles.

### Example 3

A positive electrode active material and a lithium secondary battery were manufactured in the same manner as in Example 1, except that, in the coating step, the number of atomic layer deposition cycles was 4 cycles.

### Example 4

A positive electrode active material and a lithium secondary battery were manufactured in the same manner as in Example 1, except that, in the coating step, the number of atomic layer deposition cycles was 6 cycles.

### Comparative Example 1

A positive electrode active material and a lithium secondary battery were manufactured in the same manner as in Example 1, except that, after preparation of the lithium metal oxide, the coating process was not performed.

### Comparative Example 2

A positive electrode active material and a lithium secondary battery were manufactured in the same manner as in Example 1, except that, after preparation of the lithium metal oxide and before performing the coating process, a water-washing process using distilled water was performed.

### Comparative Example 3

A positive electrode active material and a lithium secondary battery were manufactured in the same manner as in Example 1, except that, in the coating step, the number of atomic layer deposition cycles was 8 cycles.

### Comparative Example 4

A positive electrode active material and a lithium secondary battery were manufactured in the same manner as in Example 1, except that, in the coating step, the atomic layer deposition reaction temperature was 150°C.

### Comparative Example 5

A positive electrode active material and a lithium secondary battery were manufactured in the same manner as in Example 1, except that, in the coating step, the atomic layer deposition reaction temperature was 400°C.

Table 1 below summarizes process conditions of the Examples and Comparative Examples.

**[Table 1]**

| | Input Amount of Zr-Containing Gas Based on Total Weight of Lithium Metal Oxide Per Cycle (wt%) | Input Amount of H₂O Based on Total Weight of Lithium Metal Oxide Per Cycle (wt%) | Whether Water-Washing Process Was Performed | Number of Atomic Layer Deposition Cycles | Atomic Layer Deposition Reaction Temperature (°C) |
|---|---|---|---|---|---|
| Comparative Example 1 | - | - | No water-washing | - | - |
| Comparative Example 2 | 1 | 0.002 | Water-washing | 1 | 250 |
| Example 1 | 1 | 0.002 | No water-washing | 1 | 250 |
| Example 2 | 1 | 0.002 | No water-washing | 2 | 250 |
| Example 3 | 1 | 0.002 | No water-washing | 4 | 250 |
| Example 4 | 1 | 0.002 | No water-washing | 6 | 250 |
| Comparative Example 3 | 1 | 0.002 | No water-washing | 8 | 250 |
| Comparative Example 4 | 1 | 0.002 | No water-washing | 1 | 150 |
| Comparative Example 5 | 1 | 0.002 | No water-washing | 1 | 400 |

Tables 2 and 3 below summarize evaluation results of physical properties of positive electrode active materials and electrochemical characteristics of lithium secondary batteries according to Experimental Examples 2 and 3 described below.

**[Table 2]**

| | Average Thickness of Coating Layer (nm) | Average Difference Between Maximum Thickness and Minimum Thickness of Coating Layer (nm) | Li₂ZrO₃/(ZrO₂+ Li₂ZrO₃) Weight Ratio (wt%) | Zr Element Content (ppm) | LiOH (ppm) | Li₂CO₃ (ppm) | Total (ppm) |
|---|---|---|---|---|---|---|---|
| Comparative Example 1 | - | - | - | N/A | 4,594 | 4,629 | 9,223 |
| Comparative Example 2 | 0.19 | 0.15 | 5.3 | 1,022 | 1,856 | 2,036 | 3,892 |
| Example 1 | 0.22 | 0.16 | 26.2 | 1,750 | 2,295 | 2,902 | 5,197 |
| Example 2 | 0.35 | 0.12 | 32.5 | 2,770 | 2,356 | 2,621 | 4,977 |
| Example 3 | 0.68 | 0.23 | 36.1 | 4,860 | 2,126 | 2,066 | 4,192 |
| Example 4 | 0.95 | 0.45 | 45.2 | 5,966 | 1,690 | 1,882 | 3,572 |
| Comparative Example 3 | 1.22 | 0.66 | 69.3 | 8,325 | 1,455 | 1,750 | 3,205 |
| Comparative Example 4 | 0.1 | 0.06 | 8.5 | 856 | 2,450 | 3,256 | 5,706 |
| Comparative Example 5 | 0.23 | 0.11 | 55.3 | 1,233 | 2,665 | 3,980 | 6,645 |

**[Table 3]**

| | Initial Charge Capacity (mAh/g) | Initial Discharge Capacity (mAh/g) | Initial Efficiency (%) | Capacity Retention Rate (45°C, 30 cycles, %) |
|---|---|---|---|---|
| Comparative Example 1 | 226.8 | 202.3 | 89.20 | 92.8 |
| Comparative Example 2 | 226.8 | 200.1 | 88.23 | 94.3 |
| Example 1 | 226.5 | 201 | 88.74 | 94.2 |
| Example 2 | 226.7 | 202.1 | 89.15 | 94.1 |
| Example 3 | 223.6 | 201.2 | 89.98 | 94.1 |
| Example 4 | 222.1 | 200.4 | 90.23 | 93.2 |
| Comparative Example 3 | 222.3 | 196.5 | 88.39 | 90.4 |
| Comparative Example 4 | 220.6 | 198.6 | 90.03 | 92.6 |
| Comparative Example 5 | 219.6 | 199.5 | 90.85 | 90.3 |

### Experimental Example 1: Shape Analysis of Positive Electrode Active Material

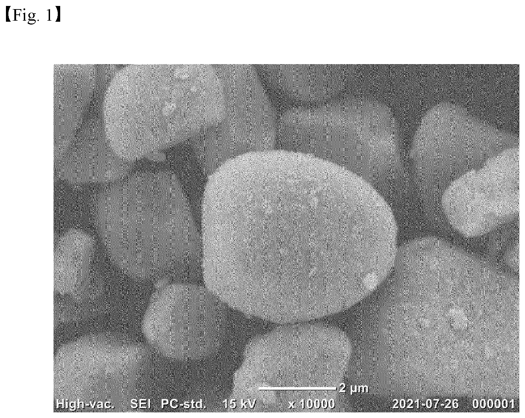

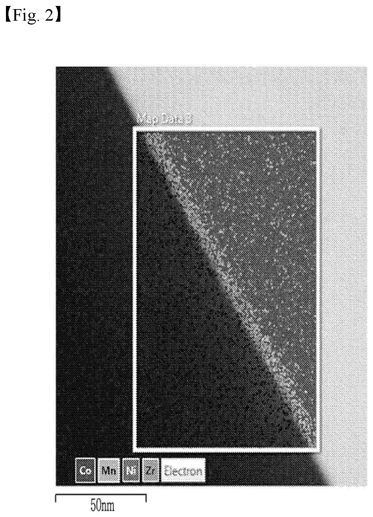

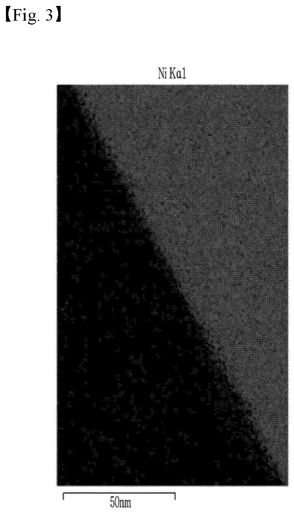

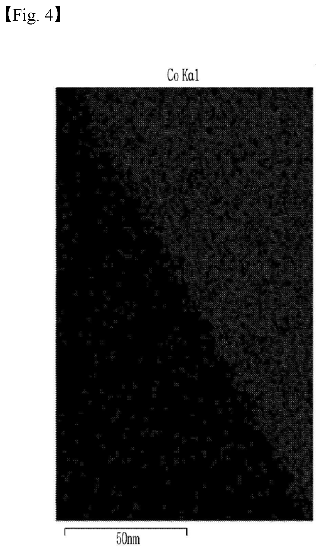

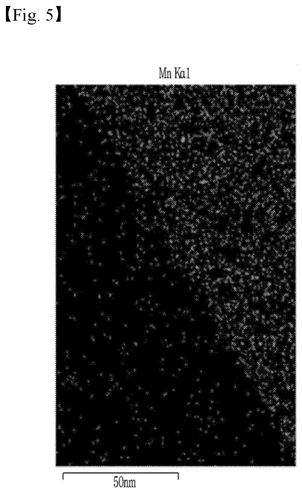

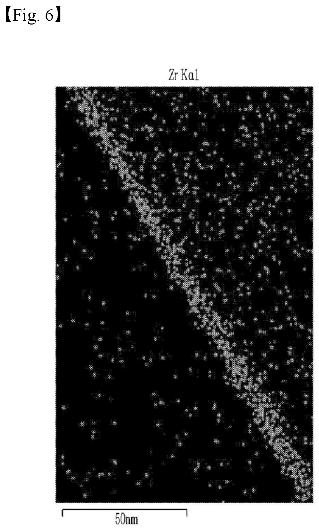

FIG. 1 is an SEM (scanning electron microscopy) image of the positive electrode active material manufactured according to Example 1. FIG. 2 is a TEM (transmission electron microscopy)-EDS (Energy Dispersive Spectroscopy) elemental mapping image of a surface portion of the positive electrode active material manufactured according to Example 1. FIG. 3 is a nickel element mapping image among the images of FIG. 2. FIG. 4 is a cobalt element mapping image among the images of FIG. 2. FIG. 5 is a manganese element mapping image among the images of FIG. 2. FIG. 6 is a zirconium element mapping image among the images of FIG. 2.

Referring to FIG. 1, it was confirmed that the positive electrode active material of Example 1 was in the form of single particles.

Referring to FIGS. 2 to 6, it was confirmed that nickel, cobalt, and manganese were uniformly distributed in a lithium metal oxide particle base material, whereas zirconium was concentrated and present with a very thin width over the entire surface of the lithium metal oxide particles. Through this, it was confirmed that the coating layer according to the present invention was a conformal-type coating layer coating the entire surface of the lithium metal oxide particles.

### Experimental Example 2: Evaluation of Physical Properties of Positive Electrode Active Material

### (1) Evaluation of Average Thickness of Coating Layer

First, the thickness of the coating layer for one positive electrode active material particle (single particle) was calculated by analyzing a cross-sectional TEM image after FIB (Focused Ion Beam) milling of the positive electrode active material particle, randomly selecting 10 positions from a surface portion of the positive electrode active material particle, and obtaining an average value of coating layer thicknesses at the selected positions. Next, the average thickness of the coating layer was calculated by obtaining an average of coating layer thicknesses measured by the same method for 20 arbitrary positive electrode active material particles among positive electrode active material powder.

### (2) Evaluation of Average of Difference Value Between Maximum Thickness and Minimum Thickness of Coating Layer

First, for one positive electrode active material particle (single particle), a difference value between a maximum thickness and a minimum thickness was calculated by analyzing a cross-sectional TEM image after FIB (Focused Ion Beam) milling of the positive electrode active material particle, calculating a maximum thickness and a minimum thickness among the entire coating layer surrounding the active material particle, and obtaining a difference value therebetween. Next, the average of the difference value between the maximum thickness and the minimum thickness of the coating layer was calculated by obtaining an average of coating layer thicknesses measured by the same method for 20 arbitrary positive electrode active material particles among positive electrode active material powder.

### (3) Evaluation of Weight Ratio of Li₂ZrO₃ to Total Weight of Li₂ZrO₃ and ZrO₂ in Coating Layer

A weight ratio of Li₂ZrO₃ to the total weight of Li₂ZrO₃ and ZrO₂ in the coating layer was evaluated through X-ray Photoelectron Spectroscopy (XPS) analysis of the surface of the positive electrode active material.

### (4) Evaluation of Zr Element Content in Positive Electrode Active Material

The Zr element content in the positive electrode active material was evaluated through ICP (inductively coupled plasma spectroscopy) component analysis.

### (5) Evaluation of Residual Lithium Content

After distilled water was added to the positive electrode active material, residual lithium was extracted using a stirrer, and the positive electrode active material powder and the extract were separated using a filtering apparatus. Thereafter, the extract was measured through neutralization titration using a Metrohm potentiometric titrator to evaluate residual lithium.

### Experimental Example 3: Evaluation of Electrochemical Characteristics of Lithium Secondary Battery

### (1) Evaluation of Initial Capacity and Initial Efficiency

After lithium secondary battery half cells were manufactured and aged at 25°C for 12 hours, a charge/discharge test was performed at 25°C. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of High-Temperature Capacity Retention Rate (45°C, 30 Cycles)

After lithium secondary battery half cells were manufactured, charging was performed at 45°C to 4.25 V at a constant current of 0.33 C, followed by switching to constant voltage, and charging was performed until the end current reached 0.05 C. After charging, a rest time of 10 minutes was provided, and discharge was performed to 2.5 V at a constant current of 0.33 C. Charging and discharging were performed 30 times under such charge/discharge cycle conditions, and a capacity retention rate of the 30th cycle relative to the first cycle was calculated.

Referring to Tables 1 to 3, in the case of Examples 1 to 4 in which overall coating process conditions, such as non-performance of the water-washing process, the atomic layer deposition coating process, the number of atomic layer deposition cycles, and the atomic layer deposition reaction temperature, were appropriately controlled, it was confirmed that various physical properties, including the content of Li₂ZrO₃ based on the total weight of Li₂ZrO₃ and ZrO₂, the average thickness of the coating layer, and the average of the difference value between the maximum thickness and the minimum thickness of the coating layer, were appropriately obtained within the ranges according to the present invention. In addition, it was confirmed that residual lithium was reduced compared with Comparative Example 1, which was the lithium metal oxide base material, while lifespan characteristics of the battery (high-temperature capacity retention rate) were improved. In addition, it was confirmed that capacity characteristics of the battery (initial discharge capacity), although somewhat deteriorated compared with Comparative Example 1, were at a similar level.

In contrast, in the case of Comparative Example 1, which was the lithium metal oxide base material, it was confirmed that the residual lithium content was excessively large compared with the Examples, and lifespan characteristics of the battery were inferior.

In the case of Comparative Example 2, as a result of performing the water-washing process, it was confirmed that the residual lithium reduction effect was excellent, but the content of Li₂ZrO₃ based on the total weight of Li₂ZrO₃ and ZrO₂ was outside the range according to the present invention. In addition, it was confirmed that capacity characteristics of the battery were deteriorated compared with the Examples. In addition, considering that the content of the zirconium element in the positive electrode active material was excessively small, it was confirmed that, as residual lithium on the surface of the surface lithium metal oxide was reduced during the coating process, the coating yield of zirconium decreased. In addition, as a result thereof, it was confirmed that the average thickness of the coating layer became somewhat thinner than that of Example 1.

In the case of Comparative Example 3, as a result of the excessive number of atomic layer deposition cycles, it was confirmed that the content of Li₂ZrO₃ based on the total weight of Li₂ZrO₃ and ZrO₂, the average thickness of the coating layer, the average of the difference value between the maximum thickness and the minimum thickness of the coating layer, and the content of the zirconium element in the positive electrode active material were outside the ranges according to the present invention. In addition, it was confirmed that capacity and lifespan characteristics of the battery were remarkably deteriorated compared with the Examples.

In the case of Comparative Example 4, as a result of an excessively low reaction temperature during atomic layer deposition, it was confirmed that the content of Li₂ZrO₃ based on the total weight of Li₂ZrO₃ and ZrO₂ was outside the range according to the present invention, and the residual lithium reduction effect was reduced compared with the Examples. In addition, it was confirmed that capacity and lifespan characteristics of the battery were deteriorated compared with the Examples. In addition, considering that the content of the zirconium element in the positive electrode active material was excessively small, it was confirmed that the coating yield decreased because the reaction temperature was too low.

In the case of Comparative Example 5, as a result of an excessively high reaction temperature during atomic layer deposition, it was confirmed that the content of Li₂ZrO₃ based on the total weight of Li₂ZrO₃ and ZrO₂ was outside the range according to the present invention, and the residual lithium reduction effect was remarkably reduced compared with the Examples. In addition, it was confirmed that capacity and lifespan characteristics of the battery were deteriorated compared with the Examples. In addition, considering that the content of the zirconium element in the positive electrode active material was excessively small, it was confirmed that the coating yield decreased even when the reaction temperature was too high.

In addition, when the effects of the Examples were compared with one another, it was confirmed that, in Examples 1 to 3, the capacity and lifespan of the battery and the residual lithium reduction effect were more comprehensively and preferably implemented.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
a lithium metal oxide having a nickel (Ni)-containing layered crystal structure in the form of single particles; and
a coating layer surrounding an entire surface of the lithium metal oxide and containing a zirconium (Zr) compound,
wherein the zirconium compound comprises Li₂ZrO₃ and ZrO₂, and
wherein a content of Li₂ZrO₃ is 10 wt% to 53 wt% based on a total weight of Li₂ZrO₃ and ZrO₂.

2. The positive electrode active material for a lithium secondary battery of claim 1,
wherein an average thickness of the coating layer is 0.1 nm to 1.1 nm.

3. The positive electrode active material for a lithium secondary battery of claim 1,
wherein an average of a difference value between a maximum thickness and a minimum thickness of the coating layer is 0.6 nm or less.

4. The positive electrode active material for a lithium secondary battery of claim 1,
wherein a content of a zirconium element in the positive electrode active material is 1400 ppm to 7500 ppm based on a total weight of the positive electrode active material.

5. The positive electrode active material for a lithium secondary battery of claim 1,
wherein the Li₂ZrO₃ is amorphous.

6. The positive electrode active material for a lithium secondary battery of claim 1,
wherein the ZrO₂ is amorphous.

7. The positive electrode active material for a lithium secondary battery of claim 1,
wherein a residual lithium content is 5500 ppm or less.

8. The positive electrode active material for a lithium secondary battery of claim 1,
wherein a content of nickel in the lithium metal oxide is 80 mol% or more based on a total number of moles of metals excluding lithium.

9. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

10. A method for manufacturing a positive electrode active material for a lithium secondary battery, comprising:
preparing a lithium metal oxide having a nickel (Ni)-containing layered crystal structure in the form of single particles; and
forming a coating layer containing a zirconium (Zr) compound on the lithium metal oxide by an atomic layer deposition method,
wherein a water-washing process is not performed after preparing the lithium metal oxide and before forming the coating layer,
wherein the zirconium compound comprises Li₂ZrO₃ and ZrO₂, and
wherein a content of Li₂ZrO₃ is 10 wt% to 53 wt% based on a total weight of Li₂ZrO₃ and ZrO₂.

11. The method for manufacturing a positive electrode active material for a lithium secondary battery of claim 10,
wherein the atomic layer deposition is performed for 1 to 7 cycles.

12. The method for manufacturing a positive electrode active material for a lithium secondary battery of claim 10,
wherein one cycle of the atomic layer deposition comprises:
supplying a zirconium-containing gas onto the lithium metal oxide to adsorb the zirconium-containing gas onto the lithium metal oxide; and
supplying and reacting a reactant onto the lithium metal oxide onto which the zirconium-containing gas is adsorbed.

13. The method for manufacturing a positive electrode active material for a lithium secondary battery of claim 12,
wherein a supply amount of the zirconium-containing gas is 0.2 wt% to 2.0 wt% based on a total weight of the lithium metal oxide.

14. The method for manufacturing a positive electrode active material for a lithium secondary battery of claim 12,
wherein a supply amount of the reactant is 0.001 wt% to 0.01 wt% based on a total weight of the lithium metal oxide.

15. The method for manufacturing a positive electrode active material for a lithium secondary battery of claim 10,
wherein the atomic layer deposition is performed at a temperature of 200°C to 350°C.

16. The method for manufacturing a positive electrode active material for a lithium secondary battery of claim 10,
wherein the atomic layer deposition is performed at a pressure of 1 torr to 10 torr.

17. A positive electrode for a lithium secondary battery, comprising the positive electrode active material of claim 1.

18. A lithium secondary battery comprising the positive electrode for a lithium secondary battery of claim 17.
